# EUROPEAN PATENT SPECIFICATION

(11) **EP 3 511 142 B1**
(45) Date of publication and mention of the grant of the patent: **29.07.2020**
(21) Application number: 18157506.9
(22) Date of filing: 19.02.2018
(51) Int. Cl.: B29B 17/04, B29B 17/02, H05B 6/64, H05B 6/80

(54) **CARBON FIBER RECYCLING DEVICE**
KOHLENSTOFFFASERRECYCLINGVORRICHTUNG
DISPOSITIF DE RECYCLAGE DE FIBRES DE CARBONE

(30) Priority: 12.01.2018 TW 107101347
(43) Date of publication of application: 17.07.2019
(73) Proprietor: UHT Unitech Co., Ltd, 32061 Taoyuan City (TW)
(72) Inventor: WANG, Chih-Yung, 32061 Taoyuan City (TW)
(74) Representative: Lang, Christian

(56) References cited:
- EP-A1- 0 136 453
- DE-A1-102007 026 748
- DE-A1-102008 062 350
- DE-C1- 19 738 882

## Description

### BACKGROUND

### 1. Technical Field

The present disclosure relates to a carbon fiber recycling device, in particular, to a carbon fiber recycling device which utilizes a microwave to recycle a carbon fiber from a carbon fiber polymer composite.

### 2. Description of Related Art

According to the current technology, the carbon fiber polymer composites (such as, Carbon Fiber Reinforced Polymer/Plastic, CFRP) are widely used in the industrial fields of aerospace aircrafts, golf clubs, tennis racquets, cars, wind powers, and medical devices since the carbon fiber polymer composite have properties of the high strength, the high elastic modulus, the nice heat resistance and the nice corrosion resistance. The produced scrap at the manufacturing stage or the carbon fiber polymer composite waste material of the scrap product with the ended usage lifetime may have the processing problem, wherein the manner for burning the carbon fiber polymer composite can merely burn the resin away, and the carbon fiber is still remained as the residue. Accordingly, the carbon fiber polymer composite waste material is usually seemed as the non-combustible solid waste and processed by the landfill manner. However, the landfill manner causes the waste of the land resource and further deteriorates surroundings. Moreover, the carbon fiber polymer composite has the high valuable carbon fiber therein, and processing by the landfill manner undoubtedly causes large waste of the carbon fiber.

There are several methods provided by the prior art to solve the above the problems, and they mainly decompose the polymers of the carbon fiber polymer composite, such that the carbon fiber in the carbon fiber polymer composite can be separated to achieve the objective of recycling the carbon fiber, wherein the polymer decomposing methods comprise the thermal decomposition, the inorganic strong acid decomposition, the organic solvent decomposition and the supercritical fluid decomposition. Though using the organic solvent decomposition can obtain the clean carbon fiber, much organic solvent is used during recycling, and thus it causes the pollution of the environment. Furthermore, after the solvent has been used, the separation operation of the solvent is complicate, and it causes the high recycling cost. Though the supercritical fluid decomposition has the clean and free pollution advantage, the supercritical fluid decomposition must progress under the high temperature and high pressure reaction condition, it needs high reaction device requirement, and the degraded production and the fluid are mixed together to be separated hardly.

The practicable industrial manner among the prior art is the thermal decomposition for processing the waste carbon fiber polymer composite. The thermal decomposition is to dispose the waste carbon fiber polymer composite in the thermal air for decomposition, and the manner is more effective for the carbon fiber polymer composite doped with the heterogeneous material, such as the metal, and can be operated continuously. However, the carbon fiber obtained from the reaction may be oxidized much, and it may have the little force property since the carbon fiber is strongly struck in the reactor or the separator.

Document DE 10 2008 062350 A1 refers to a conventional device for recycling carbon fibers from a carbon fiber polymer composite by using microwaves, wherein a continuous furnace forms a process chamber defining a plurality of chamber modules arranged one behind the other, wherein in each chamber module a microwave radiation source is arranged, wherein the microwave radiation sources of the chamber modules arranged one behind the other are provided offset from one another in a circumferential direction of the process chamber, so that a helical microwave radiation field results in the process chamber. Moreover, a feed device, such as an endless belt, is provided for moving an object from an inlet to an outlet through said process chamber, so that the object sequentially passes through each of the chamber modules.

Accordingly, how to effectively use a novel hardware design to recycle the high pure and high performance carbon fiber disposed at different angles and to reduce the input energy, consuming time and labor cost is still an issue to be continuously improved or solved by the carbon fiber recycling industry and researcher.

### SUMMARY

A main objective of the present disclosure is to provide a carbon fiber recycling device which radiate the microwave to the carbon fiber of the carbon fiber polymer composite, such that energy of the microwave is quickly absorbed by the carbon fiber to quickly increase a temperature of the carbon fiber, and the carbon fiber polymer composite is effectively and quickly decomposed to remove most polymer matrix of the carbon fiber polymer composite, so as to achieve the objective of recycling the carbon fiber indeed.

To achieve one of the above objectives, the present disclosure provides a carbon fiber recycling device according to claim 1, adapted to recycle a first carbon fiber from a carbon fiber polymer composite which comprises a polymer matrix and the first carbon fiber, wherein the polymer matrix is coupled to the first carbon fiber, the first carbon fiber comprises a first long axis direction, and the carbon fiber recycling device comprises: at least one first microwave supplying unit and a cavity; wherein the first microwave supplying unit is used to generate a first microwave, the first microwave has a first microwave direction, the first microwave is propagated to interior of the cavity; the first microwave comprises a first electric field, and the first electric field in the interior of the cavity has a first electric field direction being perpendicular to the first microwave direction; the first long axis direction of the first carbon fiber is perpendicular to the first microwave direction, or the first long axis direction of the first carbon fiber is parallel to the first electric field direction.

Regarding the above carbon fiber recycling device, the first long axis direction of the first carbon fiber is parallel to the first electric field direction.

Regarding the above carbon fiber recycling device, the cavity has a second long axis direction, and the second long axis direction of the cavity, the first electric field direction and the first long axis direction of the first carbon fiber are parallel to each other.

Regarding the above carbon fiber recycling device, the interior of the cavity is opened to have an accommodating space, the cavity has a hollow tube installed in the accommodating space, an interior hollow portion of the hollow tube is opened to have a tube accommodating space, and the carbon fiber polymer composite is disposed in the tube accommodating space.

Regarding the above carbon fiber recycling device, the hollow tube is made of a microwave-penetrable material.

Regarding the above carbon fiber recycling device, the hollow tube is a quartz tube, a crystal tube or a glass tube.

Regarding the above carbon fiber recycling device, the cavity is a metal cavity.

Regarding the above carbon fiber recycling device, the first microwave supplying unit comprises a first microwave source and a first waveguide tube, wherein one end of the first waveguide tube is coupled to the first microwave source, and other one end of the first waveguide tube is coupled to the cavity.

Regarding the above carbon fiber recycling device, the carbon fiber recycling device comprises a condensation device, and the cavity is communicated with the condensation device.

Regarding the above carbon fiber recycling device, the carbon fiber recycling device comprises at least one second microwave supplying unit used to generate a second microwave, and the second microwave is propagated to the interior of the cavity; the second microwave comprises a second electric field, the second electric field has a second electric field direction being perpendicular to the first electric field direction

Regarding the above carbon fiber recycling device, the cavity has a second long axis direction, and the first microwave supplying unit and the second microwave supplying unit are arranged along the second long axis direction of the cavity in sequence.

Regarding the above carbon fiber recycling device, the cavity has a second long axis direction, and the first electric field direction and the long axis direction of the cavity have a tilting angle therebetween.

Regarding the above carbon fiber recycling device, the cavity is a hollow cylinder.

Regarding the above carbon fiber recycling device, the cavity is a hollow polygonal prism.

Regarding the above carbon fiber recycling device, the cavity has second long axis direction, outer circumference of the hollow polygonal prism is formed by a plurality of outer surfaces, and the first microwave supplying unit and the second microwave supplying unit are arranged on one outer surface of the hollow polygonal prism in sequence.

Regarding the above carbon fiber recycling device, the cavity has a second long axis direction, outer circumference of the hollow polygonal prism is formed by a plurality of outer surfaces, twos of the outer surfaces are respectively a first outer surface and a second outer surface, each of the first outer surface and the second outer surface has one of the first microwave supplying units and one of the second microwave supplying units, and the first microwave supplying unit and the second microwave supplying unit are arrange along the second long axis direction of the cavity in sequence; wherein the first microwave supplying unit of the first outer surface and the first microwave supplying unit of the second outer surface are located at different levels, and the second microwave supplying unit of the first outer surface and the second microwave supplying unit of the second outer surface are located at different levels.

Regarding the above carbon fiber recycling device, the cavity has a second long axis direction, outer circumference of the hollow polygonal prism is formed by a plurality of outer surfaces, twos of the outer surfaces are respectively a first outer surface and a second outer surface, each of the first outer surface and the second outer surface has one of the first microwave supplying units and one of the second microwave supplying units, and the first microwave supplying unit and the second microwave supplying unit are arrange along the second long axis direction of the cavity in sequence; wherein the first microwave supplying unit of the first outer surface and the second microwave supplying unit of the second outer surface are located at a same level, and the second microwave supplying unit of the first outer surface and the first microwave supplying unit of the second outer surface are located at a same level.

Regarding the above carbon fiber recycling device, outer circumference of the hollow polygonal prism is formed by a plurality of outer surfaces, each of the outer surfaces has one of the first microwave supplying units and one of the second microwave supplying units, and the first microwave supplying unit of one of the two adjacent outer surfaces and the first microwave supplying unit of other one of the two adjacent outer surfaces are located at different levels.

Regarding the above carbon fiber recycling device, outer circumference of the hollow polygonal prism is formed by a plurality of outer surfaces, each of the outer surfaces has one of the first microwave supplying units and one of the second microwave supplying units, and the first microwave supplying unit of one of the two adjacent outer surfaces and the second microwave supplying unit of other one of the two adjacent outer surfaces are located at a same level.

Regarding the above carbon fiber recycling device, outer circumference of the hollow polygonal prism is formed by a plurality of outer surfaces, twos of the outer surfaces are respectively a first outer surface and a second outer surface, and the first outer surface and the second outer surface are adjacent to each other; inner circumference of the hollow polygonal prism is formed by a plurality of inner surfaces, and the inner surfaces have a first inner surface corresponding to the first outer surface and a second inner surface corresponding to the second outer surface; the first outer surface and the second outer surface have an angle therebetween, or the first inner surface and the second inner surface have the angle therebetween; the angle is between 60 degrees and 160 degrees.

Regarding the above carbon fiber recycling device, the angle is between 90 degrees and 150 degrees.

Regarding the above carbon fiber recycling device, the angle is between 120 degrees and 144 degrees.

Regarding the above carbon fiber recycling device, the angle is 120 degrees.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a schematic diagram of a whole carbon fiber recycling device according to the present disclosure.
FIG. 2 is a sectional view of a microwave supplying unit and a cavity of the carbon fiber recycling device according to the present disclosure.
FIG. 3 is a three dimensional view of the microwave supplying unit and the cavity of the carbon fiber recycling device according to the present disclosure.
FIG. 4 is a schematic diagram showing a propagating direction of the microwave of the carbon fiber recycling device according to the present disclosure.
FIG. 5 is a three dimensional view of the microwave supplying unit and the cavity of the carbon fiber recycling device according to present disclosure.
FIG. 6 is a schematic diagram showing a propagating direction of the microwave of the carbon fiber recycling device according to the present disclosure.
FIG. 7 is a three dimensional view of the microwave supplying unit and the cavity of the carbon fiber recycling device according to the present disclosure.
FIG. 8 is a schematic diagram showing a propagating direction of the microwave of the carbon fiber recycling device according to the present disclosure.

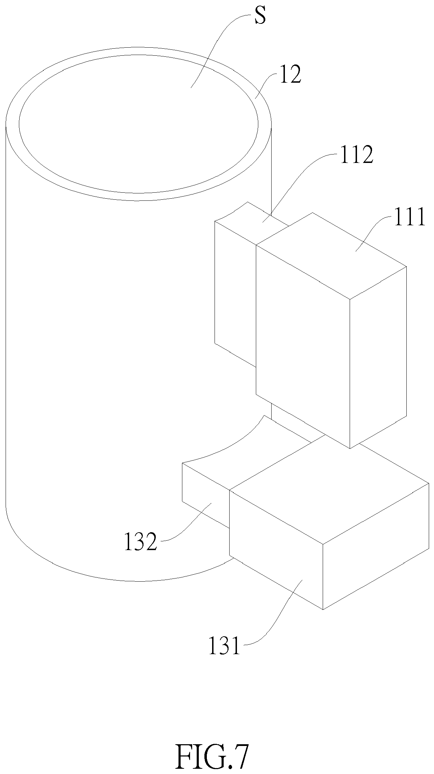

FIG. 7 is a three dimensional view of the microwave supplying unit and the cavity of the carbon fiber recycling device according to a preferred embodiment of the present disclosure.

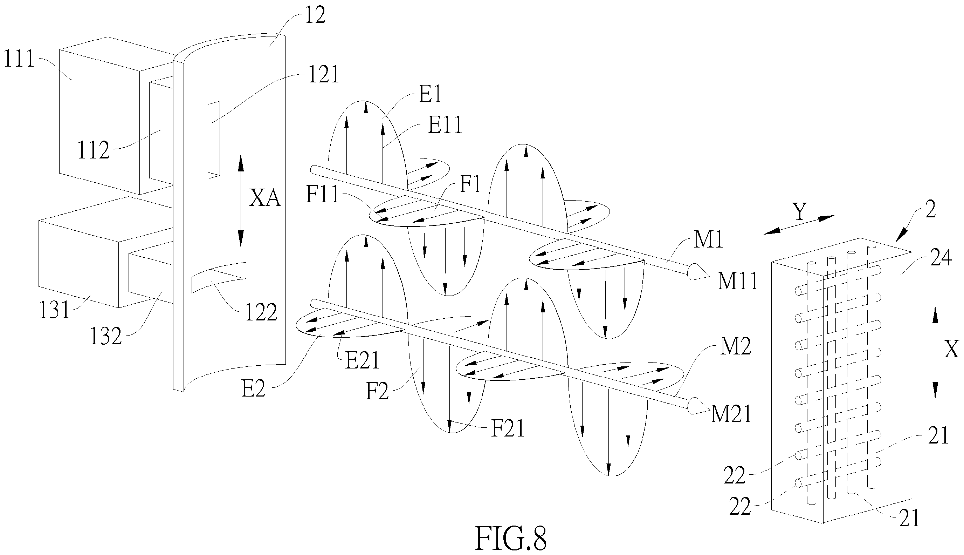

FIG. 8 is a schematic diagram showing a propagating direction of the microwave of the carbon fiber recycling device according to the preferred embodiment of the present disclosure.

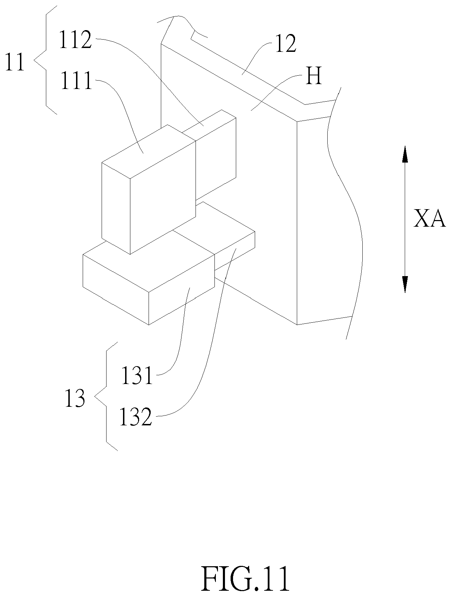

FIG. 11 is a three dimensional view of the microwave supplying unit and the cavity of the carbon fiber recycling device according to the present disclosure.

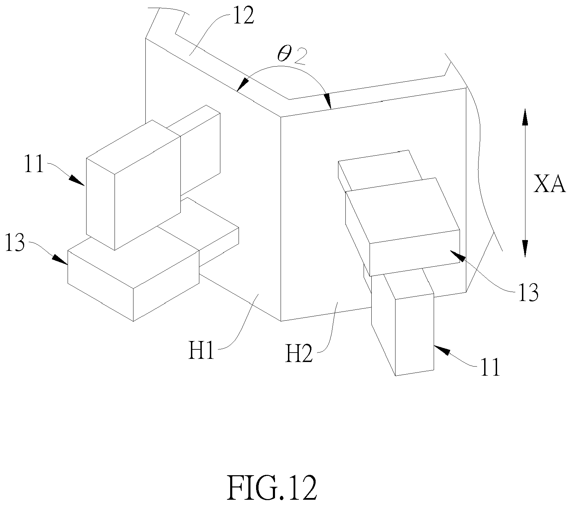

FIG. 12 is a three dimensional view of the microwave supplying unit and the cavity of the carbon fiber recycling device according to the present disclosure.

### DESCRIPTION OF THE EXEMPLARY EMBODIMENTS

To understand the technical features, content and advantages of the present disclosure and its efficacy, the present disclosure will be described in detail with reference to the accompanying drawings. The drawings are for illustrative and auxiliary purposes only and may not necessarily be the true scale and precise configuration of the present disclosure. Therefore, the scope of the present disclosure should not be limited to the scale and configuration of the attached drawings.

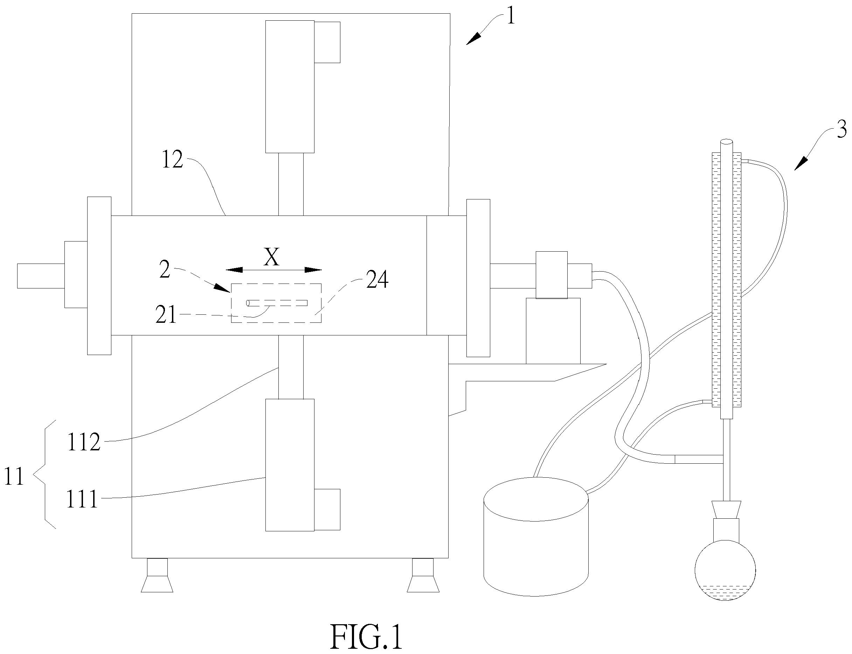

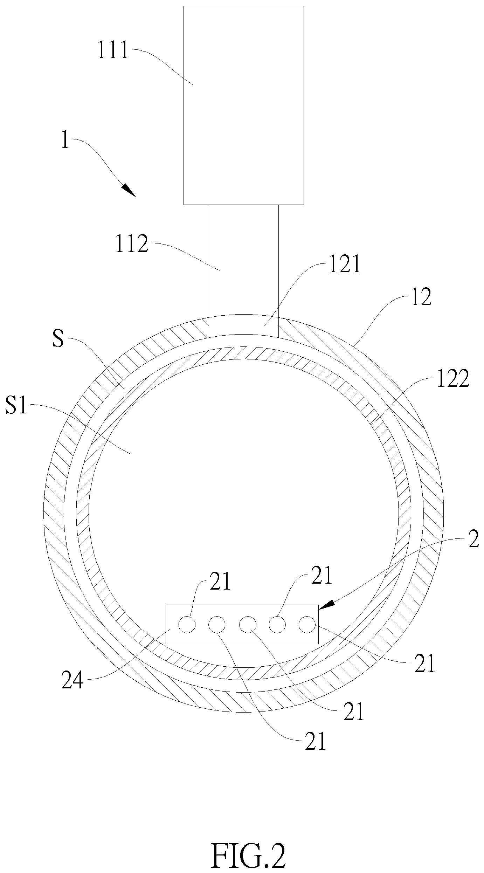

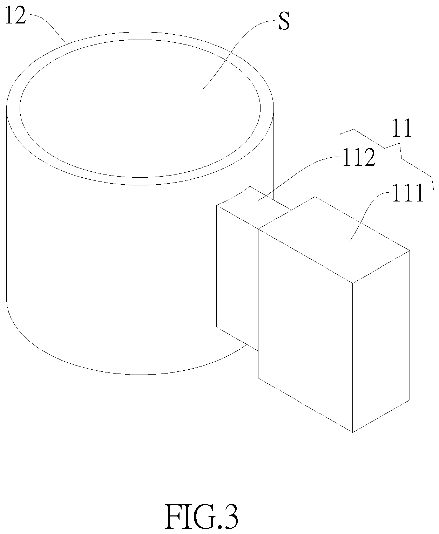

Firstly, referring to FIG. 1 through FIG. 4, the carbon fiber recycling device 1 of the present disclosure is used to recycle a first carbon fiber 21 from a carbon fiber polymer composite 2. The carbon fiber polymer composite 2 comprises a polymer matrix 24 and the first carbon fiber 21, wherein the polymer matrix 24 is coupled to the first carbon fiber 21, and the first carbon fiber 21 comprises a long axis direction X, the long axis direction X of the first carbon fiber 21 is the extending direction of the first carbon fiber 21. Preferably, the polymer matrix 24 covers the first carbon fiber 21 and couples to the first carbon fiber 21. Preferably, the carbon fiber polymer composite 2 comprises the polymer matrix 24 and a plurality of the first carbon fibers 21, and the first carbon fibers 21 are arranged parallel to the long axis direction X of the first carbon fibers 21. The polymer matrix 24 can be the thermosetting resin, the room temperature curing resin or the thermoplastic, and the thermosetting resin can be one of the unsaturated polyester resin and the epoxy resin for example.

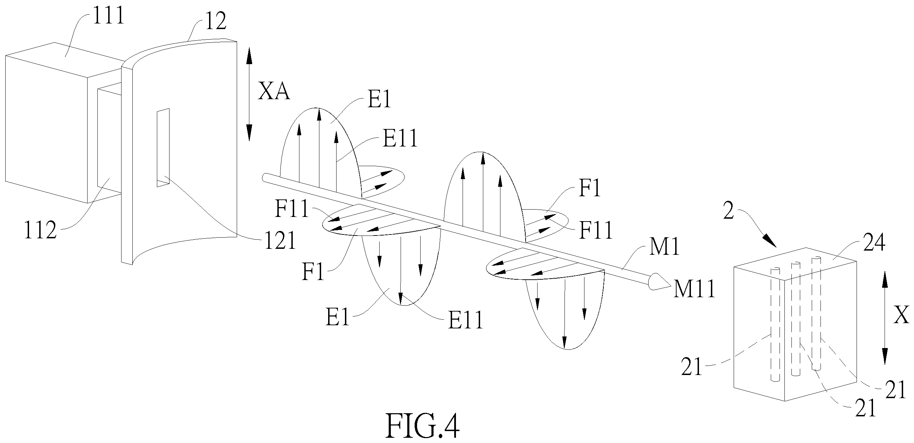

The carbon fiber recycling device 1 of the present disclosure comprises at least one first microwave supplying unit 11 and a cavity 12, wherein the first microwave supplying unit 11 comprises a first microwave source 111 and a first waveguide tube 112. One end of the first waveguide tube 112 is coupled to the first microwave source 111, and other one end of the first waveguide tube 112 is coupled to the cavity 12. The first microwave supplying unit 11 is used to generate a first microwave M1, and the first microwave M1 is propagated into interior of the cavity 12 through the first waveguide tube 112 from the first microwave source 111. The first microwave M1 comprises a first electric field E1 and a first magnetic field F1, wherein the first microwave M1 is propagated into the interior of the cavity 12 along a first microwave direction M11, the first electric field E1 within the interior of the cavity 12 has a first electric field direction E11, and the first magnetic field F1 within the interior of the cavity 12 has a first magnetic field direction F11. According to Fleming's right-hand rule, as shown in FIG. 4, the first microwave direction M11, the first electric field direction E11 and the first magnetic field direction F11 are perpendicular to each other.

The interior of the cavity 12 is opened to have an accommodating space S, and the carbon fiber polymer composite 2 is disposed in the accommodating space S. The cavity 12 has a first sidewall hole 121 coupled to the other one end of the first waveguide tube 112, such that the first microwave M1 can be propagated to the accommodating space S. The cavity 12 is made of the microwave-reflective material, such as the cavity 12 is made of the metal material to form a metal cavity with a close configuration. Since the metal can reflects the first microwave M1, the first microwave M1 in the accommodating space S can oscillate and be uniformly filled in the cavity 12. Furthermore, by using the metal to reflect the first microwave M1, the operator and other device out of the cavity 12 can be protected. The shape of the cavity 12 is not limited, for example, the cavity 12 can be one of the hollow cylinder and the hollow polygonal prism. The cavity 12 has a long axis direction XA, wherein the long axis direction XA of the cavity 12 is the extending direction of the cavity 12. As shown in FIG. 4, the long axis direction XA of the cavity 12 is the extending direction of the hollow cylinder.

In practice, the carbon fiber polymer composite 2 is disposed in the accommodating space S. Next, the first microwave source 111 is activated to generate the first microwave M1, and the first microwave M1 is propagated to the accommodating space S through the first waveguide tube 112 and the first sidewall hole 121. The first microwave M1 is radiated to the carbon fiber polymer composite 2, such the first carbon fiber 21 within the carbon fiber polymer composite 2 can quickly absorb the energy of the first microwave M1, so as to increase the temperature of the first carbon fiber 21 immediately and to heat the first carbon fiber 21. Thus, the portion of the polymer matrix 24 contacting the carbon fiber is heated to be decomposed to a plurality of small organic molecules, and due to the heat transmission effect, the other portion of the polymer matrix 24 is also heated to be decomposed to a plurality of small organic molecules.

It is noted that, if the carbon fiber polymer composite 2 is disposed in the manner that the long axis direction X of first carbon fiber 21 is parallel to the first microwave direction M11, the absorption rate of the first carbon fiber 21 for the energy of the first microwave M1 will not be large, and the temperature of the first carbon fiber 21 will not be increased sufficiently, such that the polymer matrix 24 is unable to be decomposed to the small organic molecules. If he carbon fiber polymer composite 2 is disposed in the manner that the long axis direction X of first carbon fiber 21 is perpendicular to the first microwave direction M11, the absorption rate of the first carbon fiber 21 for the energy of the first microwave M1 will be large, and the temperature of the first carbon fiber 21 will be increased sufficiently, such that the polymer matrix 24 is able to be decomposed to the small organic molecules.

It is further to be noted that, in addition to make the long axis direction X of the first carbon fiber 21 be perpendicular to the first microwave direction M11, if the first carbon fiber 21 is disposed to further make the long axis direction X of the first carbon fiber 21 be perpendicular to the first electric field direction E11, the absorption rate of the first carbon fiber 21 for the energy of the first electric field E1 will not be large, and the temperature of the first carbon fiber 21 will not be increased sufficiently, such that the polymer matrix 24 is unable to be decomposed to the small organic molecules. If the first carbon fiber 21 is disposed to further make the long axis direction X of the first carbon fiber 21 be parallel to the first electric field direction E11, the absorption rate of the first carbon fiber 21 for the energy of the first electric field E1 will be large, and the temperature of the first carbon fiber 21 will be increased sufficiently, such that the polymer matrix 24 is able to be decomposed to the small organic molecules.

In the above descriptions, the preferred configuration is that the long axis direction XA of the cavity 12, the first electric field direction E11 and the long axis direction X of the first carbon fiber 21 are parallel to each other, the long axis direction XA of cavity 12 is perpendicular to the first microwave direction M11, and the long axis direction X of the first carbon fiber 21 is perpendicular to the first microwave direction M11.

The small organic molecules can be exhausted to be sent to a condensation device 3 from the accommodating space S of the cavity 12. The small organic molecules can be capatured and condensed by the condensation device 3, so as to prevent the pollution of exhausting the small organic molecules to the air.

In the device according to the present disclosure, without additionally heating the cavity 12, the small organic molecules can be easily condensed at the sidewall of the cavity 12, and thus it causes the sidewall is polluted and not easily cleaned. In addition, the cavity 12 can be further has a hollow tube 122 installed within the accommodating space S, hollow portion of interior of the hollow tube 122 can be opened to have a tube accommodating space S1, and the carbon fiber polymer composite 2 is disposed in the tube accommodating space S1, wherein the hollow tube 122 can be made of a microwave-penetrable material, for example, the hollow tube 122 can be a quartz tube, a crystal tube or a glass tube. Therefore, the small organic molecules can be condensed at the tube wall of the hollow tube 122, such as the quartz tube, and cleaning the tube wall of the quartz tube is easier and faster than cleaning the sidewall of the cavity 12. Furthermore, the hollow tube 122 after one operation can be replaced by another one clean hollow tube 122, so as to increase the processing speed.

The device of the present disclosure is particularly suitable for the carbon fiber polymer composite 2 which is formed by the longitude-arranged first carbon fibers 21 and the polymer matrix 24, for example, the ribbon shaped carbon fiber polymer composite 2 formed by the longitude-arranged first carbon fibers 21 and the polymer matrix 24, wherein a direction of the longitude related to "longitude-arranged" is the long axis direction X of the first carbon fiber 21.

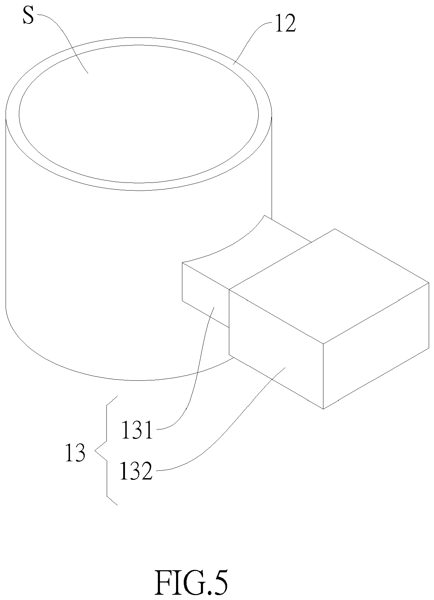

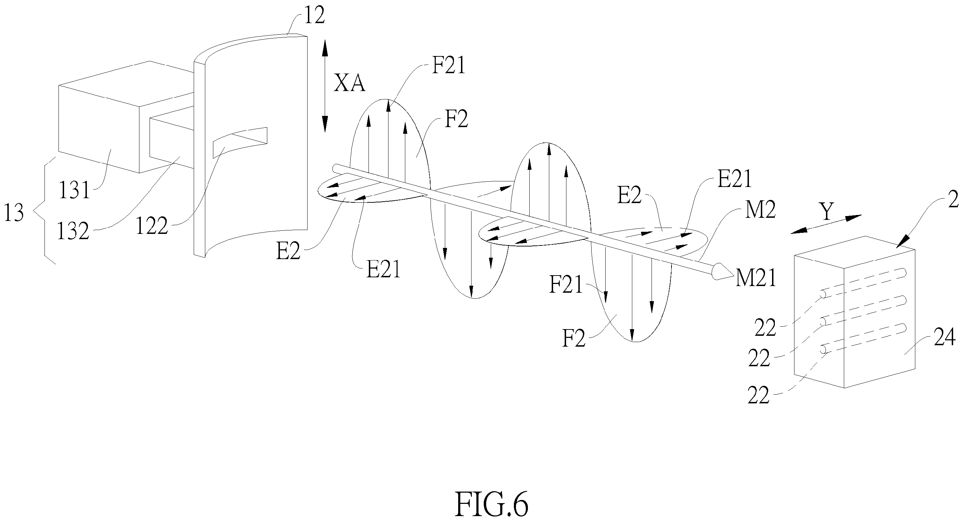

Referring to FIG. 5 an FIG. 6, another embodiment of the present disclosure is illustrated. Therein, the carbon fiber recycling device 1 further comprises at least one second microwave supplying unit 13, the second microwave supplying unit 13 is formed by a combination of a second microwave source 131 and a second waveguide tube 132. Similar to the first microwave supplying unit 11, one end of the second waveguide tube 132 is coupled to the second microwave source 131, and other one end of the second waveguide tube 132 is coupled to a second sidewall hole 122 of the cavity 12. The second microwave source 131 is used to generate a second microwave M2, the second microwave M2 is propagated to the second sidewall hole 122 and the accommodating space S of the cavity 12 from the second microwave source 131 through the second waveguide tube 132. The second microwave M2 comprises a second electric field E2 and a second magnetic field F2. The second microwave M2 is propagated to the interior (the accommodating space S) of the cavity along a second microwave direction M21. The second electric field E2 within the accommodating space S of the cavity has a second electric field direction E21. The second magnetic field F2 within the accommodating space S of the cavity has a second magnetic field direction F21. As shown in FIG. 6, the second microwave direction M21, the second electric field direction E21 and the second magnetic field direction F21 are perpendicular to each other.

The carbon fiber polymer composite 2 further comprises a second carbon fiber 22, and the second carbon fiber 22 further comprises a long axis direction Y, wherein the long axis direction Y of the second carbon fiber 22 is the extending direction of the second carbon fiber 22. Preferably, the polymer matrix 24 covers the second carbon fiber 22 and couples the second carbon fiber 22. Preferably, the carbon fiber polymer composite 2 comprises the polymer matrix 24 and a plurality of second carbon fibers 22, and the second carbon fibers 22 are arranged parallel to each other and along the long axis direction Y of the second carbon fiber 22.

The long axis direction Y of the second carbon fiber 22 is perpendicular to the second microwave direction M21, and the long axis direction Y of the second carbon fiber 22 is parallel to the second electric field direction E21.

The long axis direction XA of the cavity 12 is perpendicular to the second electric field direction E21, the long axis direction XA of the cavity 12 is perpendicular to the long axis direction Y of the second carbon fiber 22, and the long axis direction XA of the cavity 12 is perpendicular to the second microwave direction M21.

The second electric field direction E21 is perpendicular to the first electric field direction E11.

The device of the present diclosure is suitable for the carbon fiber polymer composite 2 which is formed by the latitude-arranged second carbon fibers 22 and the polymer matrix 24, for example, the ribbon shaped carbon fiber polymer composite 2 formed by the latitude-arranged second carbon fibers 22 and the polymer matrix 24, wherein a direction of the latitude related to "latitude-arranged" is the long axis direction Y of the second carbon fiber 22.

Referring to the embodiment shown in FIG. 7 and FIG. 8, the carbon fiber recycling device 1 simultaneously comprises the first microwave supplying unit 11 and the second microwave supplying unit 13. Preferably, the first microwave supplying unit 11 and the second microwave supplying unit 13 are arranged along the long axis direction XA of the cavity 12 in sequence. This embodiment is suitable for the carbon fiber polymer composite 2 which is formed by the simultaneously longitude-arranged and latitude-arranged first and second carbon fibers 21, 22 and the polymer matrix 24, for example, the ribbon shaped carbon fiber polymer composite 2 formed by the simultaneously longitude-arranged and latitude-arranged first and second carbon fibers 21, 22 and the polymer matrix 24.

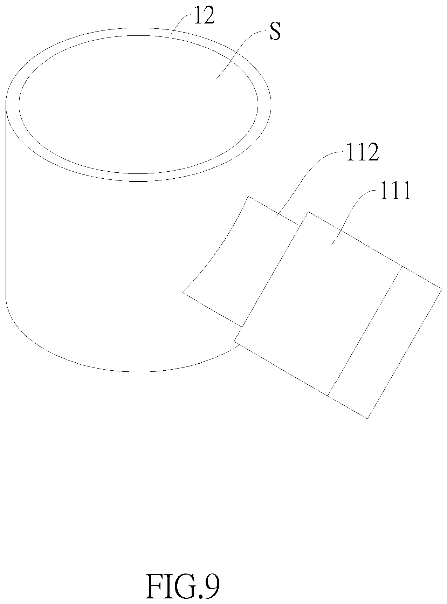

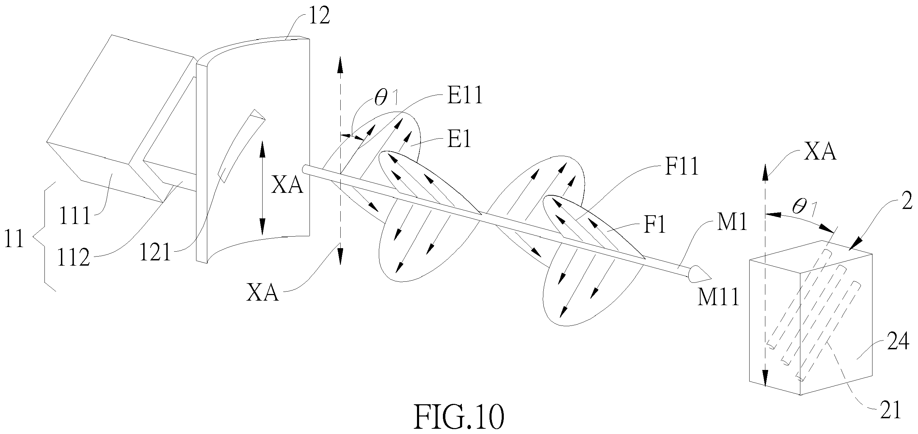

Referring to FIG. 9 and FIG. 10, the present invention adjusts the first microwave supplying unit 11 to make the first electric field direction E11 and the long axis direction XA of the cavity 12 have a tilting angle θ1 therebetween, the tilting angle θ1 is larger than 0 degree and less or equal to 90 degrees. Such device is suitable for the case that the long axis direction X of the first carbon fiber 21 and the long axis direction XA of the cavity 12 have the tilting angle θ1 therebetween when the carbon fiber polymer composite 2 is disposed in the interior of the cavity 12. In other words, the first microwave supplying unit 11 can adjust the first microwave M1 to make the angle between the first electric field direction E11 and the long axis direction XA of the cavity 12 change according to the actual requirement. For example, when the carbon fiber polymer composite 2 is disposed in the interior of the cavity 12, the tilting angle θ1 between the long axis direction X of the first carbon fiber 21 and the long axis direction XA of the cavity 12 can be firstly measured or detected, and next, the first microwave M1 of the first microwave supplying unit 11 can be adjusted, so as to make angle between the first electric field direction E11 and the long axis direction XA of the cavity 12 be the same as the tilting angle θ1. Accordingly, the first electric field direction E11 and the long axis direction X of the first carbon fiber 21 are parallel to each other. When the carbon fiber polymer composite 2 is disposed in the interior of the cavity 12, it does not need to align long axis direction X of the first carbon fiber 21 to the long axis direction XA of the cavity 12 previously, but as mentioned above, it needs to adjust the first microwave supplying unit 11 according to the requirement to make the first electric field direction E11 and the long axis direction X of the first carbon fiber 21 be parallel to each other, and thus the convenience of disposing the carbon fiber polymer composite 2 in the interior of the cavity 12 can be increased.

Similarly, the second microwave supplying unit 13 can adjust the second microwave M2 to make the angle between the second electric field direction E21 and the long axis direction XA of the cavity 12 change according to the actual requirement. Since the operation mechanism and principle are the same as the above descriptions redundant descriptions are omitted.

Referring to FIG. 11, the cavity 12 is a hollow polygonal prism, wherein outer circumference of the hollow polygonal prism is formed by a plurality of outer surfaces H, and the first microwave supplying unit 11 and the second microwave supplying unit 13 are arranged on one of the outer surfaces H of the hollow polygonal prism along the long axis direction XA of the cavity 12 in sequence. The hollow polygonal prism may be a hollow triangular prism, a hollow quadrangular prism, a hollow pentagonal prism, a hollow hexagonal prism, a hollow heptagonal prism, a hollow octagonal prism, a hollow nonagonal prism, a hollow decagonal prism, a hollow hendecagonal prism, a hollow dodecagonal prism, a tridecagonal prism, a hollow tetradecagonal prism, a hollow pentadecagonal prism, a hollow hexadecagonal prism, a hollow heptadecagonal prism, a hollow octadecagonal prism and other hollow polygonal prism.

Referring to FIG. 12, two of the outer surfaces H are respectively a first outer surface HI and a second outer surface H2, wherein each of the first outer surface HI and the second outer surface H2 has one of the first microwave supplying units 11 and one of the second microwave supplying units 13, and the first microwave supplying unit 11 and the second microwave supplying unit 13 are arranged along the long axis direction XA of the cavity 12 in sequence. The first microwave supplying unit 11 of the first outer surface HI and the first microwave supplying unit 11 of the second outer surface H2 are located at different levels, and the second microwave supplying unit 13 of the first outer surface HI and the second microwave supplying unit 13 of the second outer surface H2 are located at different levels. The first microwave supplying unit 11 of the outer surface HI and the second microwave supplying unit 13 of the second outer surface H2 are located at a same level, and second microwave supplying unit 13 of the outer surface HI and the first microwave supplying unit 11 of the second outer surface H2 are located at a same level. Preferably, the first outer surface HI is adjacent to the second outer surface H2.

The first outer surface HI and the second outer surface H2 have an angle θ2 therebetween; or alternatively, inner circumference of the hollow polygonal prism is formed by a plurality of inner surfaces, the inner surfaces have a first inner surface (not shown in the drawings) corresponding to the first outer surface H1, the inner surfaces have a second inner surface (not shown in the drawings) corresponding to the second outer surface H2, and the first and second inner surface have the angle θ2 therebetween. The angle θ2 is between 60 degrees and 160 degrees. Preferably, the angle θ2 is between 90 degrees and 150 degrees. More preferably, the angle θ2 is between 120 degrees and 144 degrees. Optimally, the angle θ2 is 120 degrees. It is noted that, the range in the present disclosure comprises the end value.

Certainly, the present disclosure can dispose one of the first microwave supplying units 11 and one of the second microwave supplying units 13 on each of the outer surfaces H, wherein the first microwave supplying unit 11 on one of the two adjacent outer surfaces H and the first microwave supplying unit 11 on other one of the two adjacent outer surfaces H are located at different levels, and the first microwave supplying unit 11 on one of the two adjacent outer surfaces H and the second microwave supplying unit 13 on other one of the two adjacent outer surfaces H are located at a same level.

## Claims

1. A carbon fiber recycling device, adapted to recycle a first carbon fiber (21) from a carbon fiber polymer composite (2), the carbon fiber recycling device (1) comprising:
at least one first microwave supplying unit (11) and a cavity (12);
wherein the cavity (12) has a second long axis direction (XA);
wherein the carbon fiber recycling device further contains a carbon fiber polymer composite (2) to be recycled disposed in an interior of the cavity (12), wherein the carbon fiber polymer composite (2) to be recycled comprises a polymer matrix (24) and the first carbon fiber (21), wherein the polymer matrix (24) is coupled to the first carbon fiber (21) and the first carbon fiber (21) defines a first long axis direction (X), wherein the first microwave supplying unit (11) is configured to generate a first microwave (M1) that is propagated along a first microwave direction (M11) to the interior of the cavity (12);
**characterized in that** the first microwave (M1) of the first microwave supplying unit (11) is adjustable to change an angle between a first electric field direction (E11) of the electric field (E1) of the first microwave (M1) and the second long axis direction (XA) of the cavity (12) to make the first long axis direction (X) of the first carbon fiber being parallel to the first electric field direction (E11).

2. The carbon fiber recycling device according to claim 1, wherein the second long axis direction (XA) of the cavity (12), the first electric field direction (E11) and the first long axis direction (X) of the first carbon fiber are parallel to each other.

3. The carbon fiber recycling device according to claim 1, wherein the interior of the cavity (12) is opened to have an accommodating space (S), the cavity (12) has a hollow tube (122) installed in the accommodating space (S), an interior hollow portion of the hollow tube (122) is opened to have a tube accommodating space (S1), and the carbon fiber polymer composite (2) is disposed in the tube accommodating space (S1).

4. The carbon fiber recycling device according to claim 3, wherein the hollow tube (122) is made of a microwave-penetrable material and / or wherein the hollow tube (122) is a quartz tube, a crystal tube or a glass tube.

5. The carbon fiber recycling device according to claim 1, wherein the cavity (12) is a metal cavity.

6. The carbon fiber recycling device according to claim 1, wherein the first microwave supplying unit (11) comprises a first microwave source (111) and a first waveguide tube (112), wherein one end of the first waveguide tube (112) is coupled to the first microwave source (111), and other one end of the first waveguide tube (112) is coupled to the cavity (12).

7. The carbon fiber recycling device according to claim 1, wherein the carbon fiber recycling device (1) comprises a condensation device (3), and the cavity (12) is communicated with the condensation device (3).

8. The carbon fiber recycling device according to claim 1, wherein the carbon fiber recycling device (1) comprises at least one second microwave supplying unit (13) used to generate a second microwave (M2), and the second microwave (M2) is propagated to the interior of the cavity (12); the second microwave (M2) comprises a second electric field (E2), the second electric field (E2) has a second electric field direction (E21) being perpendicular to the first electric field direction (E11).

9. The carbon fiber recycling device according to claim 8, wherein the first microwave supplying unit (11) and the second microwave supplying unit (13) are arranged along the second long axis direction (XA) of the cavity in sequence.

10. The carbon fiber recycling device according to claim 1, wherein the first electric field direction (E11) and the long axis direction (XA) of the cavity have a tilting angle (θ1) therebetween, wherein the tilting angle (θ1) is larger than 0 degree and less than or equal to 90 degrees.

11. The carbon fiber recycling device according to claim 1, wherein the cavity (12) is a hollow cylinder.

12. The carbon fiber recycling device according to claim 8, wherein the cavity (12) is a hollow polygonal prism.

13. The carbon fiber recycling device according to claim 12, wherein an outer circumference of the hollow polygonal prism is formed by a plurality of outer surfaces (H), and the first microwave supplying unit (11) and the second microwave supplying unit (13) are arranged on one outer surface (H) of the hollow polygonal prism in sequence.

14. The carbon fiber recycling device according to claim 12, wherein an outer circumference of the hollow polygonal prism is formed by a plurality of outer surfaces (H), two of the outer surfaces (H) are respectively a first outer surface (H1) and a second outer surface (H2), each of the first outer surface (H1) and the second outer surface (H2) has one of the first microwave supplying units (11) and one of the second microwave supplying units (13), and the first microwave supplying unit (11) and the second microwave supplying unit (13) are arrange along the second long axis direction (XA) of the cavity in sequence; wherein the first microwave supplying unit (11) of the first outer surface (H1) and the first microwave supplying unit (11) of the second outer surface (H2) are located at different levels, and the second microwave supplying unit (13) of the first outer surface (H1) and the second microwave supplying unit (13) of the second outer surface (H2) are located at different levels.

15. The carbon fiber recycling device according to claim 14, wherein the first outer surface (H1) and the second outer surface (H2) are adjacent to each other.

16. The carbon fiber recycling device according to claim 12, wherein an outer circumference of the hollow polygonal prism is formed by a plurality of outer surfaces (H), two of the outer surfaces (H) are respectively a first outer surface (H1) and a second outer surface (H2), each of the first outer surface (H1) and the second outer surface (H2) has one of the first microwave supplying units (11) and one of the second microwave supplying units (13), and the first microwave supplying unit (11) and the second microwave supplying unit (13) are arranged along the second long axis direction (XA) of the cavity in sequence; wherein the first microwave supplying unit (11) of the first outer surface (H1) and the second microwave supplying unit (13) of the second outer surface (H2) are located at a same level, and the second microwave supplying unit (13) of the first outer surface (H1) and the first microwave supplying unit (11) of the second outer surface (H2) are located at a same level.

17. The carbon fiber recycling device according to claim 16, wherein the first outer surface (H1) and the second outer surface (H2) are adjacent to each other.

18. The carbon fiber recycling device according to claim 12, wherein an outer circumference of the hollow polygonal prism is formed by a plurality of outer surfaces (H), each of the outer surfaces (H) has one of the first microwave supplying units (11) and one of the second microwave supplying units (13), and the first microwave supplying unit (11) of one of the two adjacent outer surfaces (H) and the first microwave supplying unit (11) of other one of the two adjacent outer surfaces (H) are located at different levels.

19. The carbon fiber recycling device according to claim 12, wherein an outer circumference of the hollow polygonal prism is formed by a plurality of outer surfaces (H), each of the outer surfaces (H) has one of the first microwave supplying units (11) and one of the second microwave supplying units (13), and the first microwave supplying unit (11) of one of the two adjacent outer surfaces (H) and the second microwave supplying unit (13) of other one of the two adjacent outer surfaces (H) are located at a same level.

20. The carbon fiber recycling device according to claim 12, wherein an outer circumference of the hollow polygonal prism is formed by a plurality of outer surfaces (H), two of the outer surfaces (H) are respectively a first outer surface (H1) and a second outer surface (H2), and the first outer surface (H1) and the second outer surface (H2) are adjacent to each other; an inner circumference of the hollow polygonal prism is formed by a plurality of inner surfaces, and the inner surfaces have a first inner surface corresponding to the first outer surface (H1) and a second inner surface corresponding to the second outer surface (H2); the first outer surface (H1) and the second outer surface (H2) have an angle (θ2) therebetween, or the first inner surface and the second inner surface have the angle (θ2) therebetween; the angle (θ2) is between 60 degrees and 160 degrees.

21. The carbon fiber recycling device according to claim 20, wherein the angle (θ2) is between 90 degrees and 150 degrees, especially between 120 degrees and 144 degrees, particularly 120 degrees.

## Patentansprüche

1. Kohlenstofffaserrecyclingvorrichtung, die verwendet wird, um eine erste Kohlenstofffaser (21) aus einem Kohlenstofffaser-Polymer-Verbundstoff (2) zu recyceln, wobei die Kohlenstofffaserrecyclingvorrichtung (1) umfasst:
mindestens eine erste Mikrowellenversorgungseinheit (11) und einen Hohlraum (12), wobei der Hohlraum (12) eine zweite Längsachsenrichtung (XA) aufweist, wobei die Kohlenstofffaserrecyclingvorrichtung ferner einen zu recycelnden Kohlenstofffaser-Polymer-Verbundstoff (2) umfasst, der in dem Hohlraum (12) angeordnet ist, wobei der zu recycelnde Kohlenstofffaser-Polymer-Verbundstoff (2) eine Polymermatrix (24) und die erste Kohlenstofffaser (21) umfasst, wobei die Polymermatrix (24) an die erste Kohlenstofffaser (21) gekoppelt ist und die erste Kohlenstofffaser (21) eine erste Längsachsenrichtung (X) definiert, wobei die erste Mikrowellenversorgungseinheit (11) zum Erzeugen einer ersten Mikrowelle (M1) konfiguriert ist, die sich entlang einer ersten Mikrowellenrichtung (M11) zum Inneren des Hohlraums (12) ausbreitet,
**dadurch gekennzeichnet, dass** die erste Mikrowelle (M1) der ersten Mikrowellen-versorgungseinheit (11) zum Verändern eines Winkels zwischen einer ersten elektrischen Feldrichtung (E11) des elektrischen Felds (E1) der ersten Mikrowelle (M1) und der zweiten Längsachsenrichtung (XA) des Hohlraums (12) einstellbar ist, um die erste Längsachsenrichtung (X) der ersten Kohlenstofffaser parallel zur ersten elektrischen Feldrichtung (E11) auszurichten.

2. Kohlenstofffaserrecyclingvorrichtung nach Anspruch 1, bei welcher die zweite Längsachsenrichtung (XA) des Hohlraums (12), die erste elektrische Feldrichtung (E11) und die erste Längsachsenrichtung (X) der ersten Kohlenstofffaser parallel zueinander ausgerichtet sind.

3. Kohlenstofffaserrecyclingvorrichtung nach Anspruch 1, bei welcher die Innenseite des Hohlraums (12) geöffnet ist, um einen Aufnahmeraum (S) zu bilden, wobei der Hohlraum (12) ein hohles Rohr (122) aufweist, das im Aufnahmeraum (S) installiert ist, wobei ein innerer hohler Abschnitt des hohlen Rohrs (122) geöffnet ist, um einen Rohr-Aufnahmeraum (S1) zu bilden, während der Kohlefaser-Polymer-Verbundstoff (2) im Rohr-Aufnahmeraum (S1) angeordnet ist

4. Kohlenstofffaserrecyclingvorrichtung nach Anspruch 3, bei welcher das hohle Rohr (122) aus einem mikrowellendurchlässigen Material besteht und/oder das hohle Rohr (122) ein Quarzrohr, ein Kristallrohr oder ein Glasrohr ist.

5. Kohlenstofffaserrecyclingvorrichtung nach Anspruch 1, bei weicher der Hohlraum (12) ein Metallhohlraum ist.

6. Kohlenstofffaserrecyclingvorrichtung nach Anspruch 1, bei welcher die erste Mikroweltenversorgungseinheit (11) eine erste Mikrowellenquelle (111) und ein erstes Hohlleiterrohr (112) beinhaltet, wobei ein Ende des ersten Hohlleiterrohrs (112) an der ersten Mikrowellenquelle (111) und das andere Ende des ersten Hohlleiterrohrs (112) am Hohlraum (12) gekoppelt sind.

7. Kohlenstofffaserrecyclingvorrichtung nach Anspruch 1, bei welcher die Kohlenstofffaserrecyclingvorrichtung (1) eine Kondensationseinrichtung (3) aufweist und der Hohlraum (12) mit der Kondensationseinrichtung (3) verbunden ist.

8. Kohlenstofffaserrecyclingvorrichtung nach Anspruch 1, bei welcher die Kohlenstofffaserrecyclingvorrichtung (1) mindestens eine zweite Mikrowellenversorgungseinheit (13) zur Erzeugung einer zweiten Mikrowelle (M2) aufweist, wobei die zweite Mikrowelle (M2) zur Innenseite des Hohlraums (12) erzeugt wird, wobei die zweite Mikrowelle (M2) ein zweites elektrisches Feld (E2) aufweist, wobei das zweite elektrische Feld (E2) eine zweite elektrische Feldrichtung (E21) aufweist, die senkrecht zur ersten elektrischen Feldrichtung (E11) verläuft.

9. Kohlenstofffaserrecyclingvorrichtung nach Anspruch 8, bei welcher die erste Mikrowellenversorgungseinheit (11) und die zweite Mikrowellenversorgungseinheit (13) entlang der zweiten Längsachsenrichtung (XA) des Hohlraums nacheinander angeordnet sind.

10. Kohlenstofffaserrecyclingvorrichtung nach Anspruch 1, bei welcher die erste elektrische Feldrichtung (E11) und die Längsachsenrichtung (XA) des Hohlraums zwischen sich einen Kippwinkel (θ1) aufweisen, wobei der Kippwinkel (θ1) größer als 0 Grad und kleiner oder gleich 90 Grad ist.

11. Kohlenstofffaserrecyclingvorrichtung nach Anspruch 1, **dadurch gekennzeichnet**, der Hohlraum (12) ein Hohlzylinder ist.

12. Kohlenstofffaserrecyclingvorrichtung nach Anspruch 8, wobei der Hohlraum (12) ein hohles Polygonprisma ist.

13. Kohlenstofffaserrecyclingvorrichtung nach Anspruch 12, bei welcher ein Außenumfang des hohlen Polygonprismas durch mehrere äußere Oberflächen (H) gebildet ist und die erste Mikrowellenversorgungseinheit (11) und die zweite Mikrowellenversorgungseinheit (13) an einer äußeren Oberfläche (H) des hohlen Polygonprismas der Reihe nach angeordnet sind.

14. Kohlenstofffaserrecyclingvorrichtung nach Anspruch 12, bei welcher ein Außenumfang des hohlen Polygonprismas durch mehrere äußere Oberflächen (H) gebildet ist und zwei der äußeren Oberflächen (H) je eine erste äußere Oberflächen (H1) und eine zweite äußere Oberfläche (H2) sind, wobei jede der ersten äußeren Oberflächen (H1) und der zweiten äußeren Oberflächen (H2) eine der ersten Mikrowellenversorgungseinheiten (H11) und eine der zweiten Mikrowellenversorgungseinheiten (13) aufweisen, wobei die erste Mikrowellenversorgungseinheit (11) und die zweite Mikrowellenversorgungseinheit (13) der Reihe nach entlang der zweiten Längsachsenrichtung (XA) des Hohlraums angeordnet sind, wobei die erste Mikrowellenversorgungseinheit (11) der ersten äußeren Oberfläche (H1) und die erste Mikrowellenversorgungseinheit (11) der zweiten äußeren Oberfläche (H2) auf verschiedenen Ebenen gebildet sind, wobei die zweite Mikrowellenversorgungseinheit (13) der ersten äußeren Oberfläche (H1) und die zweite Mikrowellen-Versorgungseinheit (13) der zweiten äußeren Oberfläche (H2) auf verschiedenen Ebenen angeordnet sind.

15. Kohlenstofffaserrecyclingvorrichtung nach Anspruch 14, bei welcher die erste äußere Oberfläche (H1) und die zweite äußere Oberfläche (H2) benachbart zueinander sind.

16. Kohlenstofffaserrecyclingvorrichtung nach Anspruch 12, bei welcher ein Außenumfang des hohlen Polygonprismas durch mehrere äußere Oberflächen (H) gebildet ist und zwei der äußeren Oberfläches (H) je eine erste äußere Oberfläche (H1) und eine zweite äußere Oberfläche (H2) sind, wobei jede der ersten äußeren Oberflächen (H1) und die zweite äußere Oberfläche (H2) eine der ersten Mikrowellenversorgungseinheiten (11) und eine der zweiten Mikrowellenversorgungseinheiten (13) aufweisen, wobei die erste Mikrowellenversorgungseinheit (11) und die zweite Mikrowellenversorgungseinheit (13) der Reihe nach entlang der zweiten Längsachsenrichtung (XA) des Hohlraums angeordnet sind, wobei die erste Mikrowellenversorgungseinheit (11) der ersten äußeren Oberfläche (H1) und die zweite Mikrowellenversorgungseinheit (13) der zweiten äußeren Oberfläche (H2) auf derselben Ebene gebildet sind, wobei die zweite Mikrowellenversorgungseinheit (13) der ersten äußeren Oberfläche (H1) und die erste Mikrowellenversorgungseinheit (11) der zweiten äußeren Oberfläche(H2) auf derselben Ebene angeordnet sind.

17. Kohlenstofffaserrecyclingvorrichtung nach Anspruch 16, bei welcher die erste äußere Oberfläche (H1) und die zweite äußere Oberfläche (H2) benachbart zueinander sind.

18. Kohlenstofffaserrecyclingvorrichtung nach Anspruch 12, bei welcher ein Außenumfang des hohlen Polygonprismas durch mehrere äußere Oberflächen (H) gebildet ist, wobei jede der äußeren Oberflächen (H) eine der ersten Mikrowellenversorgungseinheiten (11) und eine der zweiten Mikrowellenversorgungseinheiten (13) aufweisen, wobei die erste Mikrowellenversorgungseinheit (11) der einen der zwei benachbarten äußeren Oberflächen (H) und die erste MikrowellenVersorgungseinheit (11) der anderen der zwei benachbarten äußeren Oberflächen (H) auf verschiedenen Ebenen angeordnet sind.

19. Kohlenstofffaserrecyclingvorrichtung nach Anspruch 12, bei welcher ein Außenumfang des hohlen Polygonprismas durch mehrere äußere Oberflächen (H) gebildet ist, wobei jede der äußeren Oberflächen (H) eine der ersten MikrowellenVersorgungseinheiten (11) und eine der zweiten Mikrowellen - Versorgungseinheiten (13) aufweisen, wobei die erste Mikrowellenversorgungseinheit (11) der einen der zwei benachbarten äußeren Oberflächen (H) und die zweite Mikrowellenversorgungseinheit (13) der anderen der zwei benachbarten äußeren Oberflächen (H) auf derselben Ebene angeordnet sind.

20. Kohlenstofffaserrecyclingvorrichtung nach Anspruch 12, bei welcher ein Außenumfang des hohlen Polygonprismas durch mehrere äußere Oberflächen (H) gebildet ist, wobei zwei der äußeren Oberflächen (H) je eine erste äußere Oberfläche (H1) und eine zweite äußere Oberfläche (H2) sind, wobei die erste äußere Oberfläche (H1) und die zweite äußere Oberfläche (H2) benachbart zueinander sind, wobei der Innenumfang des hohlen Polygonprismas aus mehreren inneren Oberflächen gebildet ist, wobei die inneren Oberflächen eine erste innere Oberfläche, die der ersten äußeren Oberfläche (H1) entspricht, und eine zweite innere Oberfläche aufweisen, die der zweiten äußeren Oberfläche (H2) entspricht, wobei die erste äußere Oberfläche (H1) und die zweite äußere Oberfläche (H2) zwischen sich einen Winkel (θ2) aufweisen oder die erste innere Oberfläche und die zweiten innere Oberfläche zwischen sich den Winkel (θ2) aufweisen, wobei der Winkel (θ2) zwischen 60 Grad und 160 grad ist.

21. Kohlenstofffaserrecyclingvorrichtung nach Anspruch 20, bei welcher der Winkel (θ2) zwischen 90 Grad und 150 Grad ist, insbesondere zwischen 120 Grad und 144 Grad, insbesondere 120 Grad.

## Revendications

1. Dispositif de recyclage de fibre de carbone, adapté pour recycler une première fibre de carbone (21) d'un composite polymère de fibre de carbone (2), le dispositif de recyclage de fibre de carbone (1) comprenant:
au moins une première unité d'alimentation de micro-ondes (11) et une cavité (12);
la cavité (12) comporte une seconde direction de l'axe long (XA);
le dispositif de recyclage de fibre de carbone contient en outre un composite polymère de fibre de carbone (2) à recycler placé dans un intérieur de la cavité (12), le composite polymère de fibre de carbone (2) à recycler comprend une matrice polymère (24) et la première fibre de carbone (21), la matrice polymère (24) est couplée à la première fibre de carbone (21) et la première fibre de carbone (21) définit une première direction de l'axe long (X), la première unité d'alimentation de micro-ondes (11) est configurée pour générer une première micro-onde (M1) qui est propagée le long d'une direction de première micro-onde (M11) vers l'intérieur de la cavité (12);
**caractérisé en ce que** la première micro-onde (M1) de la première unité d'alimentation de micro-ondes (11) est réglable pour modifier un angle entre une direction de premier champ électrique (E11) du champ électrique (E1) de la première micro-onde (M1) et la seconde direction de l'axe long (XA) de la cavité (12) pour rendre la première direction de l'axe long (X) de la première fibre de carbone parallèle à la direction de premier champ électrique (E11).

2. Dispositif de recyclage de fibre de carbone selon la revendication 1, dans lequel la seconde direction de l'axe long (XA) de la cavité (12), la direction de premier champ électrique (E11) et la première direction de l'axe long (X) de la première fibre de carbone sont parallèles entre elles.

3. Dispositif de recyclage de fibre de carbone selon la revendication 1, dans lequel l'intérieur de la cavité (12) est ouverte pour comporter un espace de logement (S), la cavité (12) comporte un tube creux (122) installé dans l'espace de logement (S), une partie creuse intérieure du tube creux (122) est ouverte pour comporter un espace de logement de tube (S1), et le composite polymère de fibre de carbone (2) est placé dans l'espace de logement de tube (S1).

4. Dispositif de recyclage de fibre de carbone selon la revendication 3, dans lequel le tube creux (122) est constitué d'un matériau pénétrable aux micro-ondes et/ou le tube creux (122) est un tube de quartz, un tube de cristal ou un tube de verre.

5. Dispositif de recyclage de fibre de carbone selon la revendication 1, dans lequel la cavité (12) est une cavité métallique.

6. Dispositif de recyclage de fibre de carbone selon la revendication 1, dans lequel la première unité d'alimentation de micro-ondes (11) comprend une première source de micro-ondes (111) et un premier tube guide d'ondes (112), une extrémité du premier tube guide d'ondes (112) est couplée à la première source de micro-ondes (111), et l'autre extrémité du premier tube guide d'ondes (112) est couplée à la cavité (12).

7. Dispositif de recyclage de fibre de carbone selon la revendication 1, dans lequel le dispositif de recyclage de fibre de carbone (1) comprend un dispositif de condensation (3), et la cavité (12) communique avec le dispositif de condensation (3).

8. Dispositif de recyclage de fibre de carbone selon la revendication 1, dans lequel le dispositif de recyclage de fibre de carbone (1) comprend au moins une seconde unité d'alimentation de micro-ondes (13) utilisée pour générer une seconde micro-onde (M2), et la seconde micro-onde (M2) est propagée vers l'intérieur de la cavité (12); la seconde micro-onde (M2) comprend un second champ électrique (E2), le second champ électrique (E2) comporte une direction de second champ électrique (E21) étant perpendiculaire à la direction de premier champ électrique (E11).

9. Dispositif de recyclage de fibre de carbone selon la revendication 8, dans lequel la première unité d'alimentation de micro-ondes (11) et la seconde unité d'alimentation de micro-ondes (13) sont disposées en séquence le long de la seconde direction de l'axe long (XA) de la cavité.

10. Dispositif de recyclage de fibre de carbone selon la revendication 1, dans lequel la direction de premier champ électrique (E11) et la direction de l'axe long (XA) de la cavité présentent un angle d'inclinaison (θ1) entre elles, l'angle d'inclinaison (θ1) est supérieur à 0 degré et inférieur ou égal à 90 degrés.

11. Dispositif de recyclage de fibre de carbone selon la revendication 1, dans lequel la cavité (12) est un cylindre creux.

12. Dispositif de recyclage de fibre de carbone selon la revendication 8, dans lequel la cavité (12) est un prisme polygonal creux.

13. Dispositif de recyclage de fibre de carbone selon la revendication 12, dans lequel une circonférence extérieure du prisme polygonal creux est constituée d'une pluralité de surfaces extérieures (H), et la première unité d'alimentation de micro-ondes (11) et la seconde unité d'alimentation de micro-ondes (13) sont disposés en séquence sur une surface extérieure (H) du prisme polygonal creux.

14. Dispositif de recyclage de fibre de carbone selon la revendication 12, dans lequel une circonférence extérieure du prisme polygonal creux est constituée d'une pluralité de surfaces extérieures (H), deux des surfaces extérieures (H) sont respectivement une première surface extérieure (H1) et une seconde surface extérieure (H2), chacune des première surface extérieure (H1) et seconde surface extérieure (H2) comporte l'une des premières unités d'alimentation de micro-ondes (11) et l'une des secondes unités d'alimentation de micro-ondes (13), et la première unité d'alimentation de micro-ondes (11) et la seconde unité d'alimentation de micro-ondes (13) sont disposées en séquence le long de la seconde direction de l'axe long (XA) de la cavité; la première unité d'alimentation de micro-ondes (11) de la première surface extérieure (H1) et la première unité d'alimentation de micro-ondes (11) de la seconde surface extérieure (H2) sont situées à différents niveaux, et la seconde unité d'alimentation de micro-ondes (13) de la première surface extérieure (H1) et la seconde unité d'alimentation de micro-ondes (13) de la seconde surface extérieure (H2) sont situées à différents niveaux.

15. Dispositif de recyclage de fibre de carbone selon la revendication 14, dans lequel la première surface extérieure (H1) et la seconde surface extérieure (H2) sont adjacentes l'une à l'autre.

16. Dispositif de recyclage de fibre de carbone selon la revendication 12, **caractérisé par le fait qu'**une circonférence extérieure du prisme polygonal creux est constituée d'une pluralité de surfaces extérieures (H), deux des surfaces extérieures (H) sont respectivement une première surface extérieure (H1) et une seconde surface extérieure (H2), chacune des première surface extérieure (H1) et seconde surface extérieure (H2) comporte l'une des premières unités d'alimentation de micro-ondes (11) et l'une des secondes unités d'alimentation de micro-ondes (13), et la première unité d'alimentation de micro-ondes (11) et la seconde unité d'alimentation de micro-ondes (13) sont disposées en séquence le long de la seconde direction de l'axe long (XA) de la cavité ; la première unité d'alimentation de micro-ondes (11) de la première surface extérieure (H1) et la seconde unité d'alimentation de micro-ondes (13) de la seconde surface extérieure (H2) sont situées au même niveau, et la seconde unité d'alimentation de micro-ondes (13) de la première surface extérieure (H1) et la première unité d'alimentation de micro-ondes (11) de la seconde surface extérieure (H2) sont situées au même niveau.

17. Dispositif de recyclage de fibre de carbone selon la revendication 16, dans lequel la première surface extérieure (H1) et la seconde surface extérieure (H2) sont adjacentes l'une à l'autre.

18. Dispositif de recyclage de fibre de carbone selon la revendication 12, **caractérisé par le fait qu'**une circonférence extérieure du prisme polygonal creux est constituée d'une pluralité de surfaces extérieures (H), chacune des surfaces extérieures (H) comporte l'une des premières unités d'alimentation de micro-ondes (11) et l'une des secondes unités d'alimentation de micro-ondes (13), et la première unité d'alimentation de micro-ondes (11) de l'une des deux surfaces extérieures adjacentes (H) et la première unité d'alimentation de micro-ondes (11) de l'autre des deux surfaces extérieures adjacentes (H) sont sont situées à différents niveaux.

19. Dispositif de recyclage de fibre de carbone selon la revendication 12, **caractérisé par le fait qu'**une circonférence extérieure du prisme polygonal creux est constituée d'une pluralité de surfaces extérieures (H), chacune des surfaces extérieures (H) comporte l'une des premières unités d'alimentation de micro-ondes (11) et l'une des secondes unités d'alimentation de micro-ondes (13), et la première unité d'alimentation de micro-ondes (11) de l'une des deux surfaces extérieures adjacentes (H) et la seconde unité d'alimentation de micro-ondes (13) de l'autre des deux surfaces extérieures adjacentes (H) sont situées au même niveau.

20. Dispositif de recyclage de fibre de carbone selon la revendication 12, **caractérisé par le fait qu'**une circonférence extérieure du prisme polygonal creux est constituée d'une pluralité de surfaces extérieures (H), deux des surfaces extérieures (H) sont respectivement une première surface extérieure (H1) et une seconde surface extérieure (H2), et la première surface extérieure (H1) et la seconde surface extérieure (H2) sont adjacentes l'une à l'autre; et la circonférence intérieure du prisme polygonal creux est constituée d'une pluralité de surfaces intérieures, et les surfaces intérieures présentent une première surface intérieure correspondant à la première surface extérieure (H1) et une deuxième surface intérieure correspondant à la seconde surface extérieure (H2); la première surface extérieure (H1) et la seconde surface extérieure (H2) présentent un angle (θ2) entre elles, ou la première surface intérieure et la deuxième surface intérieure ont l'angle (θ2) entre elles ; l'angle (θ2) est entre 60 degrés et 160 degrés.

21. Dispositif de recyclage de fibre de carbone selon la revendication 20, dans lequel l'angle (θ2) est entre 90 degrés et 150 degrés, spécialement entre 120 degrés et 144 degrés, en particulier 120 degrés.
